# EUROPÄISCHE PATENTANMELDUNG

(11) **EP 1 336 749 A2**
(43) Veröffentlichungstag der Anmeldung: **20.08.2003**
(21) Anmeldenummer: 03002454.1
(22) Anmeldetag: 05.02.2003
(51) Int. Cl.: F02M 35/04

(54) **Ansaugsystem für eine Brennkraftmaschine**

(30) Priorität: 14.02.2002 DE 10205975
(71) Anmelder: FILTERWERK MANN + HUMMEL GMBH, 71638 Ludwigsburg (DE)
(72) Erfinder: Hummel, Karl-Ernst, 74321 Bietigheim-Bissingen (DE); Wild, Stephan, Dr., 75305 Neuenbürg (DE)
(74) Vertreter: Voth, Gerhard, Dipl.-Ing.

(57) **Zusammenfassung**

Ein Ansaugsystem (3) für eine Brennkraftmaschine (1) weist einen Motorblock (2), ein Ansaugsystem (3) mit einer Luftzuführung (5) zum Motorblock (2) und einen darin angeordneten Luftfilter (4), sowie eine aus dem Motorblock (2) führende Abgasanlage (7) auf, wobei das Ansaugsystem (3) ein Sekundärluftsystem (8) umfaßt. In der Luftzuführung (5) ist ein Drosselorgan angeordnet. Das Sekundärluftsystem (8) umfaßt eine Turbine (10) und einen Verdichter (11), und die Turbine (10) ist von der Druckdifferenz vor und hinter dem Drosselorgan beaufschlagt und somit der Verdichter (11) angetrieben. Der Verdichter (11) fördert durch eine Sekundärluftleitung (15) mindestens in der Kaltstartphase der Brennkraftmaschine (1) Luft in die Abgasanlage (7) zur Oxidation der Abgase. Es ist vorgesehen, daß zur Reduktion der Anzahl der Komponenten und des benötigten Bauraums der Verdichter (11) und/oder die Turbine (10) in einem Gehäuse (26) des Luftfilters (4) integriert ist.

## Beschreibung

Die Erfindung betrifft ein Ansaugsystem für eine Brennkraftmaschine der im Oberbegriff des Anspruchs 1 angegebenen Gattung.

Aus der DE 197 13 676 A1 ist eine Brennkraftmaschine mit Sekundärluftsystem bekannt, welches in das Abgassystem Frischluft einbläst. Zur Förderung der Frischluft ist ein Verdichter vorgesehen, der über eine Turbine angetrieben wird. Die Turbine wird durch die Druckdifferenz vor und nach einer im Ansaugsystem angeordneten Drosselklappe angetrieben. Das Sekundärluftsystem umfaßt mit Turbine und Verdichter sowie den zugehörigen Leitungen mehrere Komponenten, die einzeln montiert werden müssen und die Bauraum benötigen. Bei Brennkraftmaschinen, insbesondere bei Brennkraftmaschinen für Kraftfahrzeuge, ist der zur Verfügung stehende Bauraum jedoch knapp.

Der Erfindung liegt die Aufgabe zugrunde, ein Ansaugsystem für eine Brennkraftmaschine der gattungsgemäßen Art zu schaffen, das wenige Komponenten aufweist und einen geringen Bauraum benötigt.

Diese Aufgabe wird durch ein Ansaugsystem mit den Merkmalen des Anspruchs 1 gelöst.

Die Integration des Verdichters und/oder der Turbine in ein Gehäuse des Luftfilters vermindert die Anzahl der Einzelkomponenten. Für den Verdichter bzw. die Turbine wird kein separater Luftfilter benötigt und Zuleitungen von einem Luftfilter zum Verdichter und zur Turbine entfallen. Durch die Integration in ein Gehäuse des Luftfilters ist eine optimale akustische Dämmung möglich. So kann die Geräuschentwicklung vermindert werden. Durch die geringe Anzahl der Einzelkomponenten wird die Montage erleichtert.

Insbesondere bei Ansaugsystemen ohne Massenstrommesser ist die Turbine in dem Gehäuse des Luftfilters integriert. Stromauf des Drosselorgans läßt sich so die Anzahl der Einzelkomponenten weiter verringern. Zweckmäßig ist als Drosselorgan eine Drosselklappe vorgesehen, die in einem Drosselklappenstutzen angeordnet ist. Die Luftzuführung umfaßt eine stromab der Drosselklappe angeordnete Ansaugeinheit. Zur Reduzierung von Leitungen ist vorgesehen, daß die Bypaßleitung vom Ausgang der Turbine zur Ansaugeinheit in den Drosselklappenstutzen integriert ist. Zweckmäßig kann auch die Sekundärluftleitung in den Drosselklappenstutzen integriert werden. Durch die Integration von Sekundärluftleitung und Bypaßleitung in den Drosselklappenstutzen sind keine separaten Leitungsabschnitte zwischen Luftfilter und Ansaugeinheit bzw. Abgasanlage mehr notwendig.

Am Verdichter kann abströmseitig ein Absperrventil angeordnet sein, das insbesondere mit dem Verdichter zu einem Bauteil vereinigt, vorzugsweise in diesem integriert ist. Zur Steuerung der Turbinenleistung kann an der Turbine ein Regelventil angeordnet sein, das insbesondere in die Turbine integriert ist. In einer Ausführungsvariante ist vorgesehen, daß der Luftfilter mit dem Verdichter, insbesondere mit dem gesamten Sekundärluftsystem, am Motorblock oder an der Karosserie eines Fahrzeugs unmittelbar angebaut ist.

Ausführungsbeispiele der Erfindung werden im folgenden anhand der Zeichnung erläutert. Es zeigen:
- Fig. 1: eine Prinzipskizze einer Brennkraftmaschine mit in das Luftfiltergehäuse integriertem Sekundärluftlader,
- Fig. 2: eine Prinzipskizze einer Brennkraftmaschine mit in das Luftfiltergehäuse integriertem Verdichter,
- Fig. 3: eine Prinzipskizze einer Brennkraftmaschine mit in den Sekundärluftlader integrierten Ventilen.

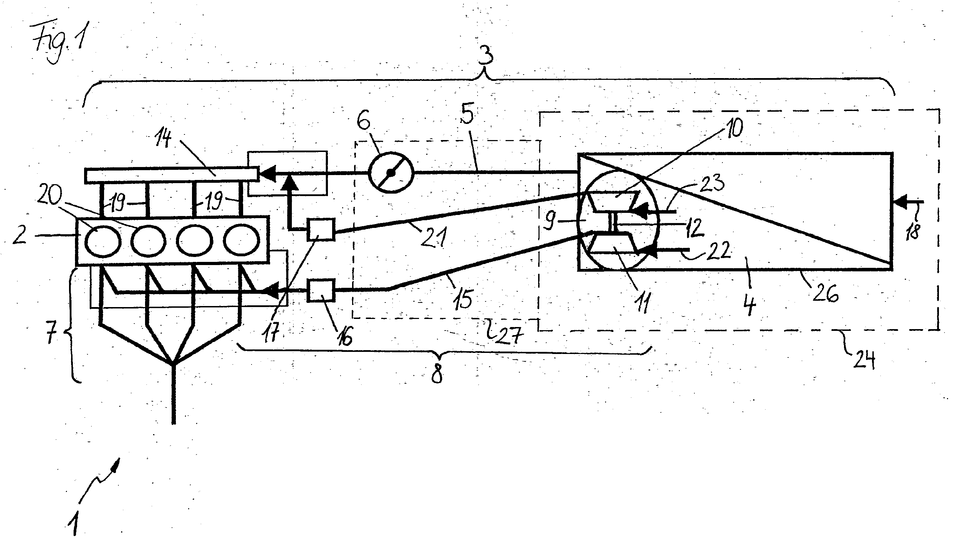

Die in Fig. 1 dargestellte Brennkraftmaschine 1 weist einen Motorblock 2 auf, in den durch das Ansaugsystem 3 Verbrennungsluft gelangt. Die Abgase verlassen den Motorblock 2 durch die Abgasanlage 7. Das Ansaugsystem 3 besteht aus einem Luftfilter 4 in einem Luftfiltergehäuse 26, in den Verbrennungsluft in der durch den Pfeil 18 angegebenen Richtung gelangt. Die Verbrennungsluft wird über die Luftzuführung 5 in die Ansaugeinheit 14 gefördert. In der Luftzuführung 5 ist ein Drosselelement, insbesondere eine in einem Drosselklappenstutzen 27 angeordnete Drosselklappe 6, angeordnet. Die Ansaugeinheit 14 umfaßt Saugrohre 19, die jeweils in einen Zylinder 20 des Motorblocks 2 münden. Zur Reduzierung der Abgase insbesondere in der Kaltstartphase der Brennkraftmaschine 1 umfaßt das Ansaugsystem 3 ein Sekundärluftsystem 8, das Frischluft in die Abgasanlage 7 zur Oxidation der Abgase fördert. Das Sekundärluftsystem 8 weist hierzu einen Sekundärluftlader 9 auf. Der Sekundärluftlader 9 besteht aus einer Turbine 10, die über eine Welle 12 einen Verdichter 11 antreibt. In der durch den Pfeil 23 angedeuteten Richtung strömt Luft aus dem Luftfilter 4 in die in das Luftfiltergehäuse 26 integrierte Turbine 10. Am Turbineneingang herrscht das gleiche Druckniveau wie in der Luftzuführung 5 stromauf der Drosselklappe 6. Von der Turbine 10 führt die Bypaßleitung 21 in einen Abschnitt der Luftzuführung 5 stromab der Drosselklappe 6. Durch die Druckdifferenz vor und nach der Drosselklappe 6 wird die Turbine 10 angetrieben. In der Bypaßleitung ist ein Regelventil 17 angeordnet, über das die durch die Bypaßleitung 21 strömende Luftmenge und damit die Leistung der Turbine 10 geregelt werden kann.

Aus dem Luftfilter 4 strömt in der durch den Pfeil 22 angedeuteten Richtung Luft in den Verdichter 11. Dieser fördert die Luft über die Sekundärluftleitung 15 in die Abgasanlage 7. In der Sekundärluftleitung 15 ist ein Absperrventil 16 angeordnet, über das die Zufuhr von Sekundärluft zu den Abgasen abgestellt werden kann. Es kann zweckmäßig sein, das Ventil 17 als Absperrventil und/oder das Ventil 16 als Regelventil auszubilden, welches eventuell auch zusätzlich als Rückschlagventil eingesetzt werden kann.

Der Sekundärluftlader 9, der die Turbine 10 und den Verdichter 11 umfaßt, ist in das Luftfiltergehäuse 26 integriert. Das Luftfiltergehäuse 26 und der Sekundärluftlader 9 bilden ein Modul 24. Das Modul 24 kann direkt an den Drosselklappenstutzen 27 montiert sein, in dem zweckmäßig die Bypaßleitung 21 und die Sekundärluftleitung 15 integriert sind.

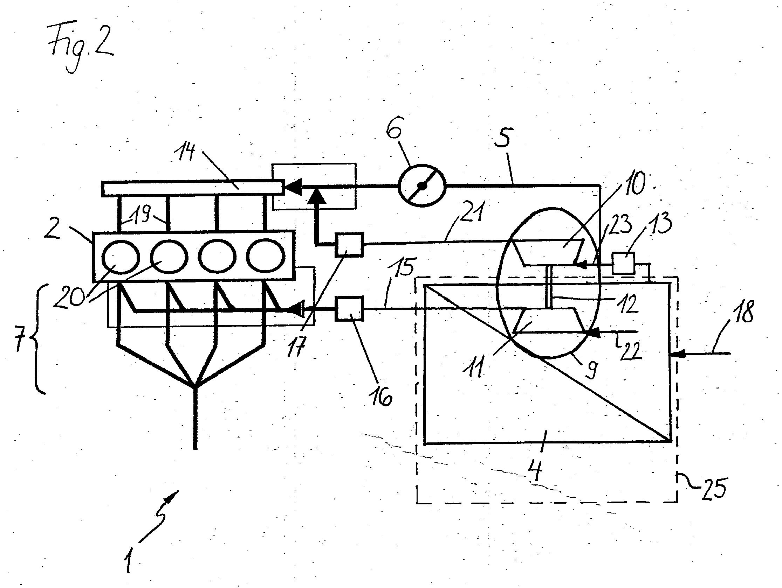

Eine Ausführungsvariante der Brennkraftmaschine 1 ist in Fig. 2 schematisch dargestellt. Gleiche Bezugszeichen wie in Fig. 1 bezeichnen gleiche Komponenten. Vor der Luftzuführung 5 und der Turbine 10 ist ein Massenstrommesser 13 angeordnet, der insbesondere als Heißfilmluftmassenmesser ausgebildet ist und der die dem Motorblock 2 zugeführte Luftmenge mißt. Der Verdichter 11 ist in den Luftfilter 4 integriert und bildet mit diesem das Modul 25. Der Massenstrommesser 13 und die Turbine 10 sind in dieser Ausführungsvariante nicht in den Luftfilter 4 integriert, sondern außerhalb von diesem angeordnet. Zwischen Massenstrommesser 13 und Turbine 10 zweigt die Luftzuführung 5 für die Ansaugeinheit 14 ab. Es kann jedoch auch zweckmäßig sein, Massenstrommesser und Turbine in den Luft-filter zu integrieren, so daß die Luftzuführung 5 zwischen Massenstrommesser 13 und Turbine 10 aus dem Luftfilter 4 austritt. Auch in dieser Ausführungsvariante können die Bypaßleitung 21 und die Sekundärluftleitung 15 in den Drosselklappenstutzen integriert sein. Es kann auch vorteilhaft sein, die Turbine 10 in den Luftfilter 4 zu integrieren und den Verdichter 11 außerhalb des Luftfilters 4 anzuordnen.

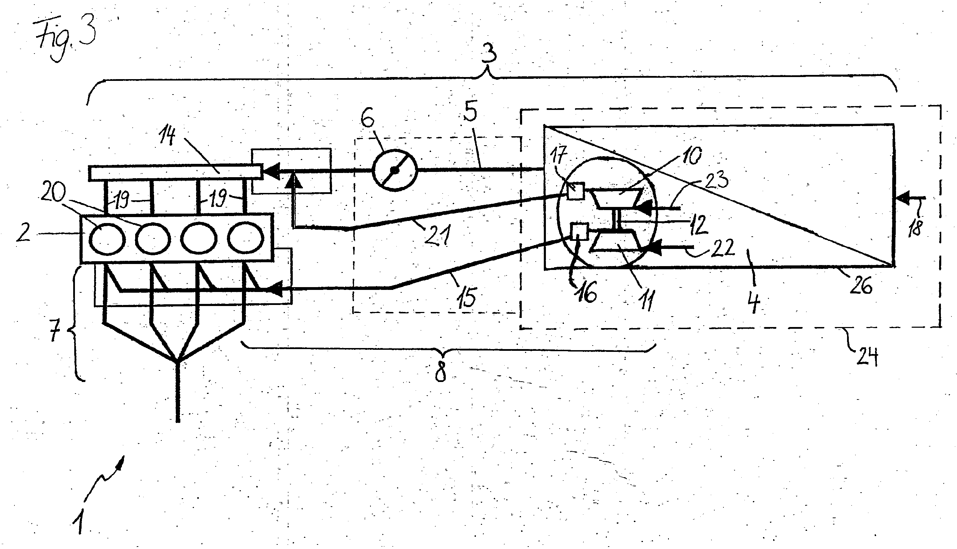

Eine weitere Ausführungsvariante ist in Fig. 3 dargestellt. Die Ventile 16 und 17 sind im Verdichter 10 und in der Turbine 11 integriert und bilden mit diesen den Sekundärluftlader 9, der im Gehäuse 26 des Luftfilters 4 angeordnet ist. Die Ventile 16 und 17 können auch am Drosselklappenstutzen angeordnet oder in diesen integriert sein.

## Patentansprüche

1. Ansaugsystem für eine Brennkraftmaschine (1), die einen Motorblock (2) mit einer Luftzuführung (5) zum Motorblock (2) und einen darin angeordneten Luftfilter (4) sowie eine aus dem Motorblock (2) führende Abgasanlage (7) aufweist, wobei das Ansaugsystem (3) ein Sekundärluftsystem (8) umfaßt und in der Luftzuführung (5) ein Drosselorgan angeordnet ist, und wobei das Sekundärluftsystem (8) eine Turbine (10) und einen Verdichter (11) umfaßt, und die Turbine (10) von der Druckdifferenz vor und hinter dem Drosselorgan beaufschlagt und somit der Verdichter (11) angetrieben wird, wobei der Verdichter (11) durch eine Sekundärluftleitung (15) mindestens in der Kaltstartphase Luft in die Abgasanlage (7) fördert,
**dadurch gekennzeichnet, daß** der Verdichter (11) und/oder die Turbine (10) in einem Gehäuse (26) des Luftfilters (4) integriert ist.

2. Ansaugsystem nach Anspruch 1,
**dadurch gekennzeichnet, daß** das Drosselorgan eine Drosselklappe (6) ist, die in einem Drosselklappenstutzen (27) angeordnet ist, und die Luftzuführung (5) eine stromab der Drosselklappe (6) angeordnete Ansaugeinheit (14) umfaßt.

3. Ansaugsystem nach Anspruch 2,
**dadurch gekennzeichnet, daß** die Bypaßleitung (21) vom Ausgang der Turbine (10) zur Ansaugeinheit (14) in den Drosselklappenstutzen (27) integriert ist.

4. Ansaugsystem nach Anspruch 2 oder 3,
**dadurch gekennzeichnet, daß** die Sekundärluftleitung (15) in den Drosselklappenstutzen (27) integriert ist.

5. Ansaugsystem nach einem der Ansprüche 1 bis 4,
**dadurch gekennzeichnet, daß** am Verdichter (11) abströmseitig ein Absperrventil (16) angeordnet ist.

6. Ansaugsystem nach Anspruch 5,
**dadurch gekennzeichnet, daß** das Absperrventil (16) mit dem Verdichter (11) zu einem Bauteil vereinigt, vorzugsweise in diesem integriert ist.

7. Ansaugsystem nach einem der Ansprüche 1 bis 6,
**dadurch gekennzeichnet, daß** an der Turbine (10) ein Regelventil (17) angeordnet ist.

8. Ansaugsystem nach Anspruch 7,
**dadurch gekennzeichnet, daß** das Regelventil (17) mit der Turbine (10) zu einem Bauteil vereinigt, vorzugsweise in diese integriert ist.

9. Ansaugsystem nach einem der Ansprüche 1 bis 8,
**dadurch gekennzeichnet, daß** der Luftfilter (4) mit dem Verdichter (11), insbesondere mit dem gesamten Sekundärluftsystem (8), am Motorblock (2) oder an der Karosserie eines Fahrzeuges unmittelbar angebaut ist.
